# EUROPEAN PATENT SPECIFICATION

(11) **EP 2 228 253 B1**
(45) Date of publication and mention of the grant of the patent: **29.02.2012**
(21) Application number: 10152696.0
(22) Date of filing: 04.02.2010
(51) Int. Cl.: B60N 2/28

(54) **Child vehicle seat as well as a base suitable for such a child vehicle seat**
Fahrzeug-Kindersitz sowie eine geeignete Grundlage für solch einen Fahrzeug-Kindersitz
Siège enfant pour véhicule ainsi qu'une base appropriée à un tel siège enfant pour véhicule

(30) Priority: 09.03.2009 NL 1036678
(43) Date of publication of application: 15.09.2010
(73) Proprietor: Maxi Miliaan B.V., 5704 RD Helmond (NL)
(72) Inventor: Karremans, Taco, 5615 AH Eindhoven (NL); Stokman, Petrus Henricus Maria, 6433 AX Hoensbroek (NL)
(74) Representative: Veldman-Dijkers, Cornelia G. C.

(56) References cited:
- EP-A- 1 593 545
- DE-A1- 3 809 968
- GB-A- 2 403 138
- US-A- 5 890 762

## Description

The invention relates to a child vehicle seat as defined in the preamble of claim 1.

The invention relates further to a base suitable for such a child vehicle seat.

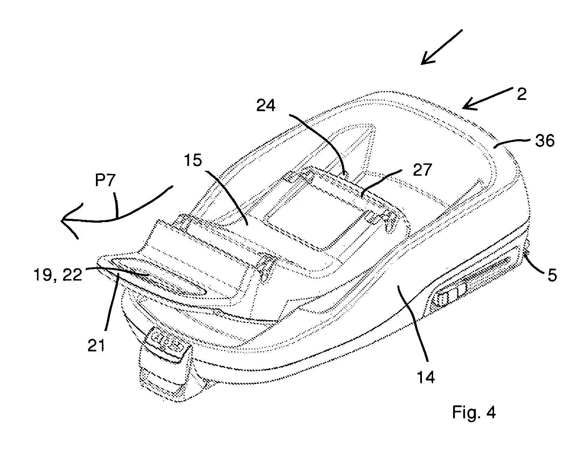

In such a child vehicle seat which is known from US patent US-5.890.762 a slide together with a seat for a child is swivelable with respect to a support of a base between more than two positions. The positions are defined by pin through holes of the support which are accessible by means of a pin of the slide for locking said slide in a certain position. Further, said slide comprises a grip on one end and on the other end slits. Said slits extend in a diagonal direction crossing the longitudinal direction of the slide. Said slits are formed such that the further away to the grip of the slide they are, the closer the distance therebetween is. Rear ends of the pins are passed through each slits respectively, such that by moving the slide in a longitudinal direction the pins are moved in a width direction. Said movement of the pins in the width direction causes the pins to lock or unlock in the pin through holes. For adjusting an inclination angle of said seat from a position in which the pins are locked, said slide is pulled forward in the longitudinal direction indicated by the arrow A (figure 4) such that the pins are guided by the slits to come off the pin through holes so that the slide and the seat are allowed to swivel together relative to the base.

Although, the pin through holes combined with pins for adjusting and locking said seat in a certain inclination angle have proven to be easy in handling and have proven to be a strong and reliable connection as the locked pin is completely surrounded by the pin through hole, it is a drawback of the child vehicle seat known that in the unlocked condition of the pins, said seat is no longer connected to the base.

If a person e.g. incidentally does not lock the front ends of the pins in pin through holes of the support after setting said seat under a certain inclination angle for use of said seat, such seat is only resting on rails. Forces exerted to said child vehicle seat in this resting condition of the seat may cause the seat to fall, which may cause injury to child seated in said seat. As there is no predefined position, in which the seat together with the slide has to be connected to the base, the possibility that at least one of the pins has not locked in one of the pin through holes increases.

It is an object of the invention to provide a child vehicle seat with a detachable and swivelable seat preventing wrong use of the child vehicle seat.

This object is accomplished with the child vehicle seat according to the invention as specified in the characterizing part of claim 1.

By the child vehicle seat according to the invention the function of detachably connecting the seat to the base is provided between the seat and the slide of the base. The function for reclining the seat with respect to the base is provided between the slide and the support of the base. In this manner the technical means for realizing these functions is individually optimized.

Safety has been increased by means of slots as during reclining the seat with regard to the base, said seat together with the slide remain always connected by means of the slots to said base.

Each pin through hole defines another position of the seat such that moving a pin in or out of a pin through hole for respectively locking and unlocking the slide is relatively easy.

Since the seat is detachably connected to the slide, the seat can easily be removed from the slide and be used as such or on another base. Such another base may also comprise a support and a slide being swivelable with respect to the support or may only comprise a support to which the seat can be detachably connected. Further, due to the separation of functions a preferred position of said seat for a child, is automatically memorized as only the slide remaining in said preferred position has to be connected to said seat. If there is more than one base used for one seat, e.g. two bases in two different cars of a family, each base is able to memorize said preferred position of said seat for a child.

The seat as such needs not to be provided with means for reclining so that the seat can have a relatively simple design. Furthermore it is possible to use different seats for children of different ages on the same base so that an adult needs only to buy one base with the possibility for reclining the seat, which he can use for different kind of seats. Since the function for reclining is provided in the base, the weight of the seat will be relatively small.

An embodiment of the child vehicle seat according to the invention is characterized in that the slide comprises two pins, each in said unlocked position being slidable in one of the slots located in the base on both sides of the slide.

In this manner the pins are both being used for defining the sitting position and several reclined positions as well as for guiding the swivelable motion of the slide with respect to the support.

If desired it is possible to provide hollow tubes in which the pins are slidably located, whereby ends of the tubes are slidably located in the slots.

A further embodiment of the child vehicle seat according to the invention is characterized in that actuating means are located on the slide, which actuating means comprises a slidable element with at least one slit extending at an angle of at least 5° to the longitudinal direction of the base, in which slit a projection on the pin is located, which slidable element is slidable from a rest position in which the pin is in the locked position to an activated position in which the projection on the pin is being displaced in the slit whereby the pin is being moved to the unlocked position and vice versa.

With such a slidable element and such a slit it is relatively easy to move the pin from the locking position to the unlocked position and vice versa. The angle is dependent on the travel distance of the slidable element, i.e. with a relatively large angle only a relatively small travel distance is required for bringing the slidable element from the rest position to an activated position.

Another embodiment of the child vehicle seat according to the invention is characterized in that the slit is located near a rear side of the slide whereby the slidable element is provided with a handle near a forward side of the slide.

With such a handle the slidable element can easily be moved with respect to the slide.

Preferably the slide is provided with a gripping passage through which the handle is accessible in use of the child vehicle seat.

If a user wants to change the position of the slide with respect to the support, he may insert his fingers in the gripping passage after which he can move the handle with respect to the slide whereby he can put the palm of his hand on the slide. If he has moved his fingers towards his palm whereby the slidable element is being moved to the activated position, he may then pull or push the slide to the desired sitting position or reclined position whilst maintaining the slidable element in the activated position.

It is an advantage of the child vehicle seat according to the invention that with only one hand the position of the slide with respect to the support can be adjusted.

The invention will be explained in more detail hereinafter with reference to the drawings in which:
fig. 1 is a perspective view of a child vehicle seat according to the invention,
fig. 2 is a perspective rear view of the seat of the child vehicle seat as shown in fig. 1,
fig. 3 is a perspective view of the base of the child vehicle seat as shown in fig. 1, whereby the slide is in the sitting position,
fig. 4 is a perspective view of the base of the child vehicle seat as shown in fig. 1, whereby the slide is in the reclined position,
fig. 5 is a perspective view of the base, showing a part of the base for locking and unlocking a slide of the base to a support of the base,
fig. 6, 7 and 8 are perspective views of some parts of the support and the slide in respectively a locked sitting position, an unlocked sitting position and a locked reclined position.

Like parts are indicated by the same numerals in the various figures.

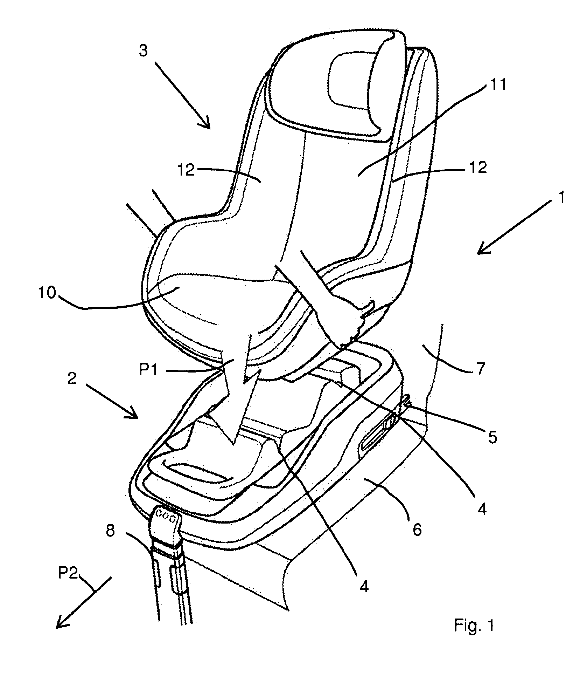

Fig. 1 shows a child vehicle seat 1 according to the invention comprising a base 2 and a seat 3 which is connectable to the base 2 by moving the seat 3 in a direction indicated by arrow P1. The seat 3 comprises belts (not shown) to secure a child in the seat 3. The base 2 is provided with two elongated recesses 4 which extend perpendicular to the driving direction indicated by arrow P2 of the vehicle (not shown) into which the seat 3 is mounted. Said recesses define only one specific position for mounting the seat 3 to said base 2. The base 2 is provided with connectors 5 which are detachably connectable to brackets available in a vehicle between a vehicle seat portion 6 and a back rest portion 7 of the vehicle seat. Such a manner of connecting a base to a vehicle seat is well known and will therefore not further be explained.

The base 2 is also provided with a leg 8 which rests with an end remote of the base 2 on the floor of the vehicle. Such a leg 8 is well known and will therefore not be further explained.

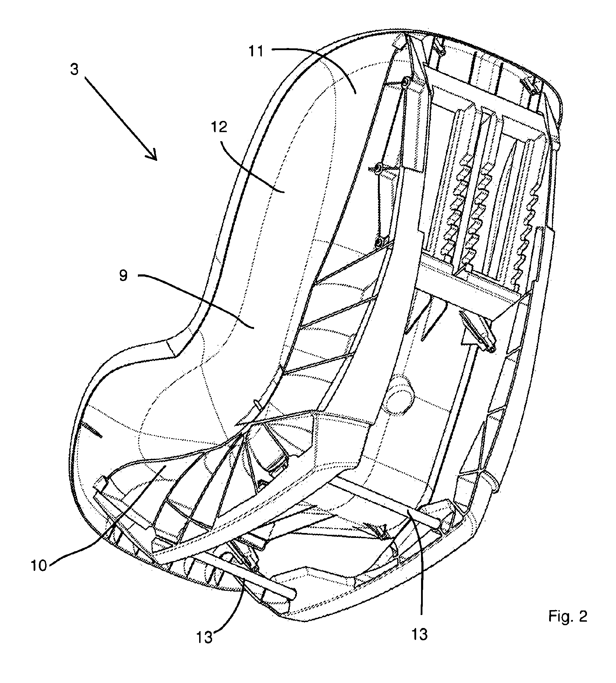

Fig. 2 shows the seat 3 of the child vehicle seat 1 as shown in fig. 1, which seat 3 is provided with a shell-shaped part 9. The shell-shaped part 9 comprises a seat portion 10, a back rest portion 11 and side rests portions 12 for supporting the child sitting in the seat 3. The seat 3 is provided on the lower part of the seat portion 10 with two bars 13 extending parallel to each other and located at a distance of each other corresponding to the distance between the recesses 4 of the base 2. The bars 13 can be positioned in the recesses 4 and detachably connected to the base 2.

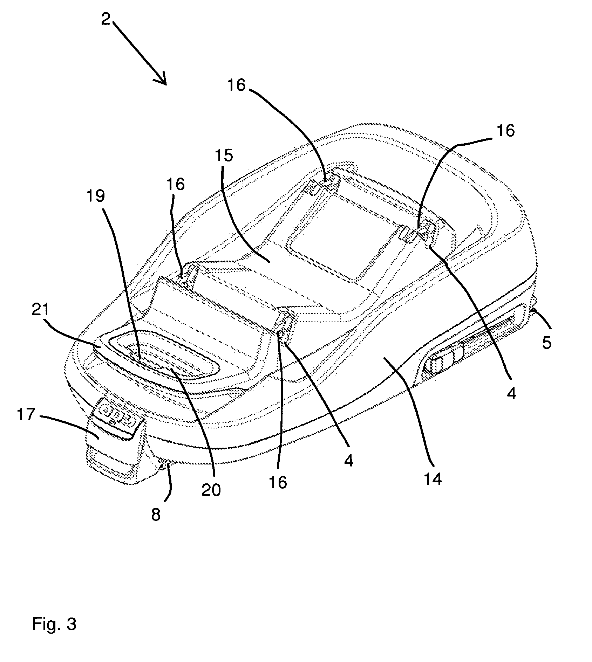

Fig. 3 shows a perspective view of the base 2. The base comprises a support 14 and a slide 15 which is slidably connected to the support 14. The slide 15 comprises four hooks 16 each being rotatable with respect to the slide 15 from a position in which the bars of the seat 3 can be positioned in the recesses 4 of the slide 15 to a position in which the bars 13 and thereby the seat 3 is detachably connected to the slide 15. The hooks 16 can be disconnected from the bars 13 by means of a handle 17 in the support 14. Such a kind of connecting a seat 3 to a base 2 is described in the Dutch patent application 1036453 of applicant. It is also possible to use another kind of rapid coupling means than hooks 16 for detachably connecting the seat 3 to the base 2.

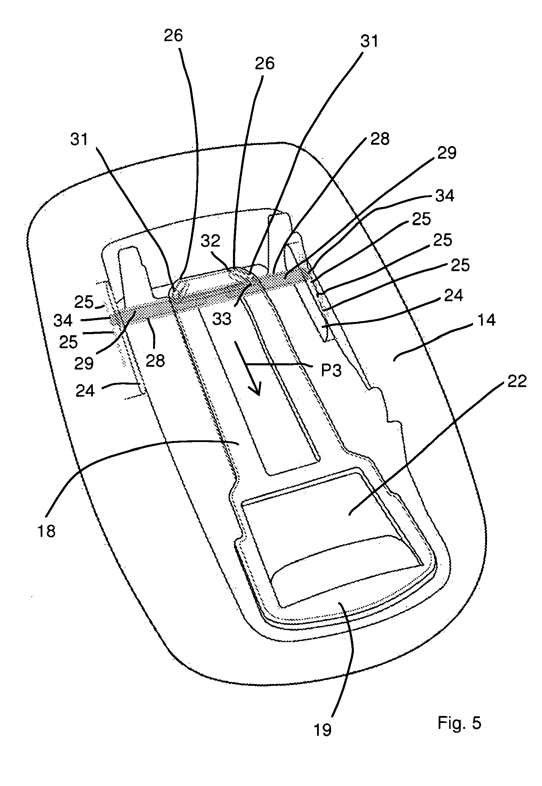

The slide 15 is provided with a slidable element 18 (see fig. 5). In fig. 3 only a handle 19 of the slidable element 18 is visible. The slide 15 is provided near the handle 19 with a gripping passage 20 and a grip 21. The gripping passage 20 is coaxial with a gripping passage 22 of the slidable element 18.

Fig. 4 shows the slide 15 in a reclined position with respect to the support 14.

Fig. 5 shows the support 14 which is provided on both sides of the slidable element 18 with elongated slots 24 and a row of pin through holes 25 which open in the slot 24. Axes of the pin through holes 25 extend perpendicular to the longitudinal direction, indicated by arrow P3 of the support 14. The slidable element 18 is provided near a rear side 27 of the slide 15 with two slits 26 extending at an angle α of at least 5° to the longitudinal direction P3.

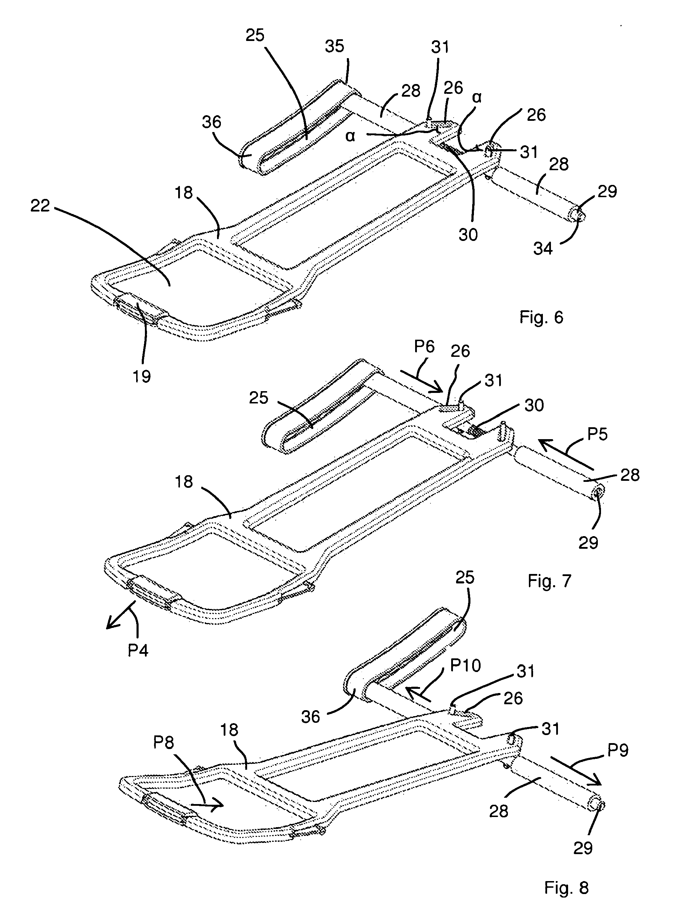

The slide 15 is provided near a rear side 27 with two hollow tubes 28 extending perpendicular to the longitudinal direction P3. Slidably located in the hollow tubes are pins 29 which are forced to move away from each other by means of a spring 30 (see fig. 6) being positioned between ends of the pins 29. Each pin 29 is provided with a projection 31 extending perpendicular to the axis of the pin 29, which projection 31 is slidably located in one of the slits 26. As is clearly visible in fig. 5 ends 32 of the slits 26 closer to the rear side 27 of the slide 15 are at a distance of each other which is smaller than the distance between the other ends 33 of the slits 26.

In the position of the slidable element 18 as shown in fig. 5, the projections 31 are located near ends 33 whereby the pins 29 are moved away from each other so that ends 34 of the pins 29 extend outside the hollow tubes 28 and into pin through holes 25. In this manner the slide 15 is firmly locked to the support 14.

The operation of the child seat 1 will now be explained with reference to the figures 6-8.

Fig. 6 shows a slidable element 18 in a rest position whereby the projections 31 are located near the ends 33 of the slits 26 so that the ends 34 of the pins 29 extend into pin through holes 25. In the situation as shown in fig. 6 said pin through holes 25 are located near an end 35 of the elongated slot 24, which end 35 is located near the rear side 37 of the support 14. In the situation as shown in fig. 6 the slide 15 and the seat 3 detachably connected thereto are in the sitting position.

If a user wants to change the position of the seat to a more reclined position he inserts his fingers into the gripping passages 20, 22 and will place the palm of his hand to the grip 21 of the slide 15. By moving his fingers towards his palm he will move the slidable element 18 inside the slide 15 in the direction as indicated by arrow P4 towards the grip 21 at the front side of the support 14. By doing so the projections 31 will be moved from the end 33 of the slits 26 towards the end 32 of the slits 26 against the force of the spring 30. As a result the pins 29 will be moved towards each other in the directions as indicated by arrows P5, P6 which directions extend perpendicular to the direction as indicated by arrow P4. The slidable element 18 is now in its activated position (see figure 7).

The ends 34 of the pins 29 are no longer located in the pin through holes 25 so that the slide 15 can be moved in the direction as indicated by arrow P7 (fig. 4) towards the desired reclined position. The hollow tubes 28 of the slide 15 will be guided by the arched slots 24.

In the situation as shown in fig. 8 the slide 15 and thereby the slidable element 18 is moved to a reclined position whereby the hollow tubes 28 rest against another end 36 of the arched slot 25. The user has moved his fingers away from his palm so that the pins 29 will move away from each other in the directions as indicated by arrows P9, P10 under spring force of the spring 30. As a result the projections 31 of the pins 29 will be moved towards the ends 33 of the slits 26 and the slidable element 18 will be moved in a direction indicated by arrow P8 being opposite to the direction indicated by arrow P4 towards the rear side 27 of the slide 15. Ends 34 of the pins 29 will now be positioned in pin through holes 25 located near the end 36 of the slots 25.

It is also possible to position the slide 15 in a position between the sitting position as shown in fig. 6 and the resting position as shown in fig. 8 whereby the ends 34 of the pins 29 are being positioned in intermediate pin through holes 25.

Safety has been enormously increased by means of slots 24 as during reclining the seat 3 together with the slide 15 with regard to the base, said seat together with the slide remain always connected by means of the slots 24 to said base 2.

## Claims

1. Child vehicle seat (1) comprising a base (2) provided with at least a support (14), a slide (15), and a seat (3) being detachably connected to the base (2), wherein the seat (3) and the slide (15) being swivelable together with respect to the support (14) during normal use between more than two positions, the support (14) comprises a number of pin through holes (25) defining at least the sitting position, an intermediate position and the reclined position, whereby the slide (15) comprises at least one pin (29) being movable against spring force with respect to the slide from a locking position in which the pin is located in one of the pin through holes to an unlocked position in which the pin is located outside the pin through holes such that the slide is swivelable with respect to the support, **characterized in that**, the support (14) comprises at least one elongated slot (24) such that the pin through holes are accessible by the pin through the slot, wherein the pin is captured in the slot in said unlocked position, such that the swivelable slide is unremovably attached to the base and the seat is detachably connected to the slide.

2. Child vehicle seat according to claim 1, **characterized in that** the slide comprises two pins (29), each in said unlocked position being slidable in one of the slots (24) located in the base (2) on both sides of the slide (15).

3. Child vehicle seat according to claim 1 or 2, **characterized in that** actuating means are located on the slide, which actuating means comprises a slidable element (18) with at least one slit (26) extending at an angle of at least 5° to the longitudinal direction of the base (2), in which slit (26) a projection (31) of the pin (29) is located, which slidable element is slidable from a rest position (fig. 6) in which the pin is in the locked position to an activated position (fig. 7) in which the projection (31) on the pin (29) has been displaced in the slit such that the pin is being moved to the unlocked position and vice versa.

4. Child vehicle seat according to claim 3, **characterized in that** the slit (26) is located near a rear side of the slide whereby the slidable element is provided with a handle (19) near a forward side of the slide.

5. Child vehicle seat according to any preceding claim, **characterized in that** only in a specific position defined by recesses (4) in the slide the seat is connectable to the slide preferably by means of rapid coupling means (16).

6. Child vehicle seat according to any preceding claim 3-5, **characterized in that** the slide together with the seat are swivelable to the reclined position by pulling on the actuating means.

7. Child vehicle seat according to any preceding claim, **characterized in that** the slots (24) are slightly arched whereby ends of the slots correspond respectively with the sitting position and the most reclined position of the seat.

8. Base suitable for a child vehicle seat according to one of the preceding claims, which base (2) comprises at least a support (14), a slide (15), wherein the slide (15) being swivelable with respect to the support (14) during normal use between more than two positions, the support (14) comprises a number of pin through holes (25) defining at least the sitting position, an intermediate position and the reclined position, whereby the slide (15) comprises at least one pin (29) being movable against spring force with respect to the slide from a locking position in which the pin is located in one of the pin through holes to an unlocked position in which the pin is located outside the pin through holes such that the slide is swivelable with respect to the support, **characterized in that**, the support (14) comprises at least one elongated slot (24) such that the pin through holes are accessible by the pin through the slot, wherein the pin is captured in the slot in said unlocked position, such that the swivelable slide is unremovably attached to the base and said slide is configured to detachably connect a seat.

## Patentansprüche

1. Fahrzeug-Kindersitz (1), umfassend eine Basis (2), die mindestens mit einer Aufnahme (14), einem Schlitten (15) und einem abnehmbar mit der Basis verbundenen Sitz (3) versehen ist, wobei Sitz (3) und Schlitten (15) im normalen Gebrauch miteinander relativ zur Aufnahme (14) zwischen mehr als zwei Positionen schwenkbar sind, wobei die Aufnahme (14) eine Anzahl von Stiftdurchgangslöchern (25) aufweist, welche zumindest die Sitzposition, eine Zwischenposition und die Liegeposition bestimmen, wobei der Schlitten (15) mindestens einen Stift (29) umfasst, der gegen Federkraft relativ zum Schlitten aus einer blockierten Position, in welcher der Stift sich in einem der Stiftdurchgangslöcher befindet, in eine freie Position, in welcher der Stift sich außerhalb der Stiftdurchgangslöcher befindet, bewegt werden kann, sodass der Schlitten bezüglich der Aufnahme geschwenkt werden kann, **dadurch gekennzeichnet, dass** die Aufnahme (14) mindestens eine Längsnut (24) aufweist, sodass die Stiftdurchgangslöcher durch die Längsnut für den Stift zugänglich sind, wobei der Stift in der freien Position in der Längsnut eingeschlossen ist, sodass der schwenkbare Schlitten an der Basis unabnehmbar befestigt und der Sitz abnehmbar mit dem Schlitten verbunden ist.

2. Fahrzeug-Kindersitz nach Anspruch 1, **dadurch gekennzeichnet, dass** der Schlitten zwei Stifte (29) aufweist, wobei in der freien Position jeder Stift in einer der in der Basis (2) auf beiden Seiten des Schlittens (15) angebrachten Längsnuten (24) verschiebbar ist.

3. Fahrzeug-Kindersitz nach Anspruch 1 oder 2, **dadurch gekennzeichnet, dass** sich auf dem Schlitten ein Betätigungsmittel befindet, welches ein verschiebbares Element (18) mit mindestens einem in einem Winkel von mindestens 5° zur Längsrichtung der Basis (2) verlaufenden Schlitz (26) umfasst, in dem eine Nase (31) des Stifts (29) untergebracht ist, wobei das verschiebbare Element aus einer Ruheposition (Figur 6), in welcher der Stift sich in der blockierten Position befindet, in eine aktive Position (Figur 7) und umgekehrt verschoben werden kann, in welcher die Nase (31) auf dem Stift (29) so im Schlitz verschoben ist, dass der Stift in die freie Position verschoben ist.

4. Fahrzeug-Kindersitz nach Anspruch 3, **dadurch gekennzeichnet, dass** der Schlitz (26) sich nahe der Rückseite des Schlittens befindet, während das verschiebbare Element mit einem Griff (19) nahe der Vorderseite des Schlittens versehen ist.

5. Fahrzeug-Kindersitz nach einem der vorangehenden Ansprüche, **dadurch gekennzeichnet, dass** der Sitz nur in einer durch Ausnehmungen (4) im Schlitten bestimmten besonderen Position mit dem Schlitten, vorzugsweise mittels Schnellkupplungen (16), verbindbar ist.

6. Fahrzeug-Kindersitz nach einem der vorangehenden Ansprüche 3 bis 5, **dadurch gekennzeichnet, dass** der Schlitten zusammen mit dem Sitz durch Ziehen am Betätigungsmittel in die liegende Position schwenkbar ist.

7. Fahrzeug-Kindersitz nach einem der vorangehenden Ansprüche, **dadurch gekennzeichnet, dass** die Längsnuten (24) leicht gebogen sind, wobei die Enden der Längsnuten der sitzenden bzw. der am weitesten liegenden Position entsprechen.

8. Für einen Fahrzeug-Kindersitz nach einem der vorangehenden Ansprüche geeignete Basis (2), umfassend mindestens eine Aufnahme (14), einen Schlitten (15), wobei der Schlitten (15) im normalen Gebrauch bezüglich der Aufnahme (14) zwischen mehr als zwei Positionen schwenkbar ist, wobei die Aufnahme (14) eine Anzahl von Stiftdurchgangslöchern (25) aufweist, welche zumindest die Sitzposition, eine Zwischenposition und die Liegeposition bestimmen, wobei der Schlitten (15) mindestens einen Stift (29) umfasst, der gegen Federkraft relativ zum Schlitten aus einer blockierten Position, in welcher der Stift sich in einem der Stiftdurchgangslöcher befindet, in eine freie Position, in welcher der Stift sich außerhalb der Stiftdurchgangslöcher befindet, bewegt werden kann, sodass der Schlitten bezüglich der Aufnahme geschwenkt werden kann, **dadurch gekennzeichnet, dass** die Aufnahme (14) mindestens eine Längsnut (24) aufweist, sodass die Stiftdurchgangslöcher durch die Längsnut für den Stift zugänglich sind, wobei der Stift in der freien Position in der Längsnut eingeschlossen ist, sodass der schwenkbare Schlitten an der Basis unabnehmbar befestigt und so eingerichtet ist, dass ein Sitz abnehmbar mit dem Schlitten verbunden werden kann.

## Revendications

1. Siège auto pour enfant (1) comprenant une base (2) dotée d'au moins un support (14), une glissière (15), et un siège (3) raccordé de façon amovible à la base (2), dans lequel le siège (3) et la glissière (15) sont pivotables ensemble par rapport au support (14) en utilisation normale entre plus de deux positions, le support (14) comprend un certain nombre de trous traversants de tige (25) définissant au moins la position assise, une position intermédiaire et la position inclinée, moyennant quoi la glissière (15) comprend au moins une tige (29) étant mobile contre la force de ressort par rapport à la glissière d'une position de verrouillage dans laquelle la tige est située dans un des trous traversants de tige vers une position déverrouillée dans laquelle la tige est située à l'extérieur des trous traversants de tige de sorte que la glissière est pivotable par rapport au support, **caractérisé en ce que**, le support (14) comprend au moins une rainure allongée (24) de sorte que les trous traversants de tige sont accessibles à la tige par l'intermédiaire de la rainure, dans lequel la tige est prise dans la rainure dans ladite position déverrouillée, de sorte que la glissière pivotable est attachée de façon inamovible à la base et le siège est raccordé de façon amovible à la glissière.

2. Siège auto pour enfant selon la revendication 1, **caractérisé en ce que** la glissière comprend deux tiges (29), chacune étant, dans ladite position déverrouillée, coulissante dans une des rainures (24) situées dans la base (2) sur les deux côtés de la glissière (15).

3. Siège auto pour enfant selon la revendication 1 ou 2, **caractérisé en ce qu'**un moyen d'actionnement est situé sur la glissière, lequel moyen d'actionnement comprend un élément coulissant (18) comprenant au moins une fente (26) s'étendant à un angle d'au moins 5° vers la direction longitudinale de la base (2), dans laquelle fente (26), une saillie (31) de la tige (29) est située, lequel élément coulissant est coulissant d'une position de repos (fig. 6) dans laquelle la tige est dans la position verrouillée à une position activée (fig. 7) dans laquelle la saillie (31) sur la tige (29) a été déplacée dans la fente de sorte que la tige est déplacée en position déverrouillée et vice versa.

4. Siège auto pour enfant selon la revendication 3, **caractérisé en ce que** la fente (26) est située à proximité d'un côté arrière de la glissière moyennant quoi l'élément coulissant est doté d'une poignée (19) à proximité d'un côté avant de la glissière.

5. Siège auto pour enfant selon l'une quelconque des revendications précédentes, **caractérisé en ce qu'**uniquement dans une position spécifique définie par des évidements (4) dans la glissière le siège est raccordable à la glissière de préférence au moyen d'un moyen d'accouplement rapide (16).

6. Siège auto pour enfant selon l'une quelconque des revendications précédentes 3 à 5, **caractérisé en ce que** la glissière et le siège sont pivotables ensemble vers la position inclinée en tirant sur le moyen d'actionnement.

7. Siège auto pour enfant selon l'une quelconque des revendications précédentes, **caractérisé en ce que** les rainures (24) sont légèrement incurvées moyennant quoi des extrémités des rainures correspondent respectivement à la position assise et la position la plus inclinée du siège.

8. Base adaptée pour un siège auto pour enfant selon l'une quelconque des revendications précédentes, laquelle base (2) comprend au moins un support (14), une glissière (15), dans laquelle la glissière (15) est pivotable par rapport au support (14) en utilisation normale entre plus de deux positions, le support (14) comprend un certain nombre de trous traversants de tige (25) définissant au moins une position assise, une position intermédiaire et la position inclinée, moyennant quoi la glissière (15) comprend au moins une tige (29) étant mobile contre la force du ressort par rapport à la glissière à partir d'une position de verrouillage dans laquelle la tige est située à l'extérieur des trous traversants de tige de sorte que la glissière est pivotable par rapport au support, **caractérisée en ce que**, le support (14) comprend au moins une rainure allongée (24) de sorte que les trous traversants de tige sont accessibles par la tige par l'intermédiaire de la rainure, dans laquelle la tige est prise dans la rainure dans ladite position déverrouillée, de sorte que la glissière pivotable est attachée de façon inamovible à la base et ladite glissière est configurée pour raccorder un siège de façon amovible.
